# EUROPÄISCHE PATENTSCHRIFT

(11) **EP 0 649 895 B1**
(45) Veröffentlichungstag und Bekanntmachung des Hinweises auf die Patenterteilung: **02.06.1999**
(21) Anmeldenummer: 94116527.6
(22) Anmeldetag: 20.10.1994
(51) Int. Cl.: C09K 3/32, C02F 1/68

(54) **Saugmatte für ölige und wässrige Flüssigkeiten**
Absorbant mat for oily or aqueous fluids
Matte absorbante pour liquides huileux et aqueux

(30) Priorität: 20.10.1993 DE 9315954 U; 27.01.1994 DE 9401338 U
(43) Veröffentlichungstag der Anmeldung: 26.04.1995
(73) Patentinhaber: MEWA Textil-Service AG, D-65189 Wiesbaden (DE)
(72) Erfinder:
(74) Vertreter: Tergau, Enno, Dipl.-Ing.

(56) Entgegenhaltungen:
- US-A- 4 737 394
- US-A- 5 186 831
- US-A- 5 324 429
- DATABASE WPI Section Ch, Week 7513, Derwent Publications Ltd., London, GB; Class A97, AN 75-21847W & JP-B-50 005 154 (CHISSO CORP) 28. Februar 1975
- PATENT ABSTRACTS OF JAPAN vol. 014, no. 492 (C-0773) 26. Oktober 1990 & JP-A-02 202 979 (MITSUI PETROCHEM IND LTD) 13. August 1990

## Beschreibung

Die Erfindung betriffl eine Saugmatte zur Aufnahme öliger und wässriger Flüssigkeiten mit einem von einer flüssigkeitsdurchlässigen Umhüllung umgebenen Kern aus einem saug- und speicherfähigen Werkstoff. Solche Saugmatten verhindern z.B. die Verschmutzung von Industrieböden in der Nähe von undichten, nämlich leckenden Maschinen, Fahrzeugen o.dgl.. Sie werden dann als Unterlage benutzt. Weiterhin sind Saugmatten zur nur selektiven Aufnahme von Leichtflüssigkeiten wie Öl und Benzin bekannt. Die dienen dann beispielsweise zur Separierung solcher Flüssigkeiten von Wasser und werden somit im Gewässerschutz eingesetzt.

Es ist weiter bekannt, solche Saugmatten, soweit die Kapazität ihrer Flüssigkeitsaufnahme erschöpft ist, durch Zentrifugieren, Auswringen oder durch chemisches Herauslösen der Schmutzstoffe bzw. Schmutzflüssigkeiten zu regenerieren (z.B. EP 0 295 911 B1)

Weiterhin ist es bekannt, Polypropylenfasern in Baumwoll-Werg, Baumwollhüllen, Nadeltuch oder in Tauen mit Hohlräumen von jeweils mehr als 85 Vol.% zum Aufsaugen von Öl aus Wasser zu verwenden (JP 50 00 5154).

Der Erfindung liegt die Aufgabe zugrunde, eine Saugmatte der eingangs genannten Art so auszubilden, daß sie sich vor allen Dingen für die Regenerierung in einem normalen Waschverfahren mittels einer Tensid-Waschlauge eignet. Die dabei herausgewaschenen Leichtflüssigkeiten wie Öl, Benzin, Lösemittel - nachstehend kurz "ölige Flüssigkeiten" genannt - sowie Wasser etc. bilden mit der Waschlauge eine Emulsion und werden anschließend durch Absetzung aus der Emulsion herausgelöst. Die aus der Waschlauge herausgelösten öligen Flüssigkeiten werden dann zur Energieerzeugung verbrannt. So werden heute bereits ganze Wäschereien für Maschinenputztücher mit Heizenergie versorgt, die aus den herausgewaschenen öligen Flüssigkeiten gewonnen wird.

Maschinenputztücher zur Aufnahme öliger und wässriger Flüssigkeiten, wie z.B. auch Kühlmittel für die zerspanende Bearbeitung, werden beispielsweise konstruktiv so ausgelegt, daß sie neben einem hohen Saugvermögen und hoher mechanischer Widerstandsfähigkeit eine möglichst große Anzahl von Waschvorgängen beschädigungslos überstehen. So sollen Putztücher beispielsweise 50 Waschvorgänge schadlos und ohne Einbuße ihrer Flüssigkeits-Aufnahmefähigkeit überstehen.

Der Erfindung liegt die Aufgabe zugrunde, eine Saugmatte der eingangs genannten Art so auszubilden, daß sie sich ebenfalls durch eine hohe mechanische Festigkeit und Beständigkeit sowie durch ein hohes Saugvermögen auszeichnet, welches über eine große Zahl von Waschvorgängen der eingangs genannten Art unverändert beibehalten wird. Diese Aufgabe wird durch Anspruch 1 gelöst. Eine besonders zweckmäßige Ausgestaltung ist Gegenstand des Anspruches 2. Ein Vlies nach Anspruch 3 hat sich dabei als besonders zweckmäßig erwiesen, wobei die Vliesdicke nach Anspruch 4 die Handhabbarkeit der Saugmatte in Funktion, aber auch bei der Lagerung und beim Transport begünstigt.

Der Aufbau der Gewebeumhüllung nach Anspruch 5 zeichnet sich durch eine besondere Verschleißfestigkeit bei gleichzeitig ausreichender Flüssigkeitsdurchlässigkeit aus. Dies ist insbesondere in der Ausgestaltung nach den Ansprüchen 6-9 der Fall.

Anspruch 10 beschreibt den Aufbau der aus der Bahn eines Hüllgewebes hergestellten Gewebehülle für den Saugkern. In den Ansprüchen 11-14 sind bevorzugte Details des konstruktiven Aufbaus der Gewebehülle für den Kern niedergelegt.

Die Ansprüche 15-18 bestimmen das Erscheinungsbild der Saugmatte und sorgen für eine ausreichende Festigkeit der Fixierung des Saugkernes innerhalb des Hüllgewebes.

Die Erfindung wird anhand eines in den Figuren dargestellten Ausführungsbeispiels erläutert. Darin zeigen:

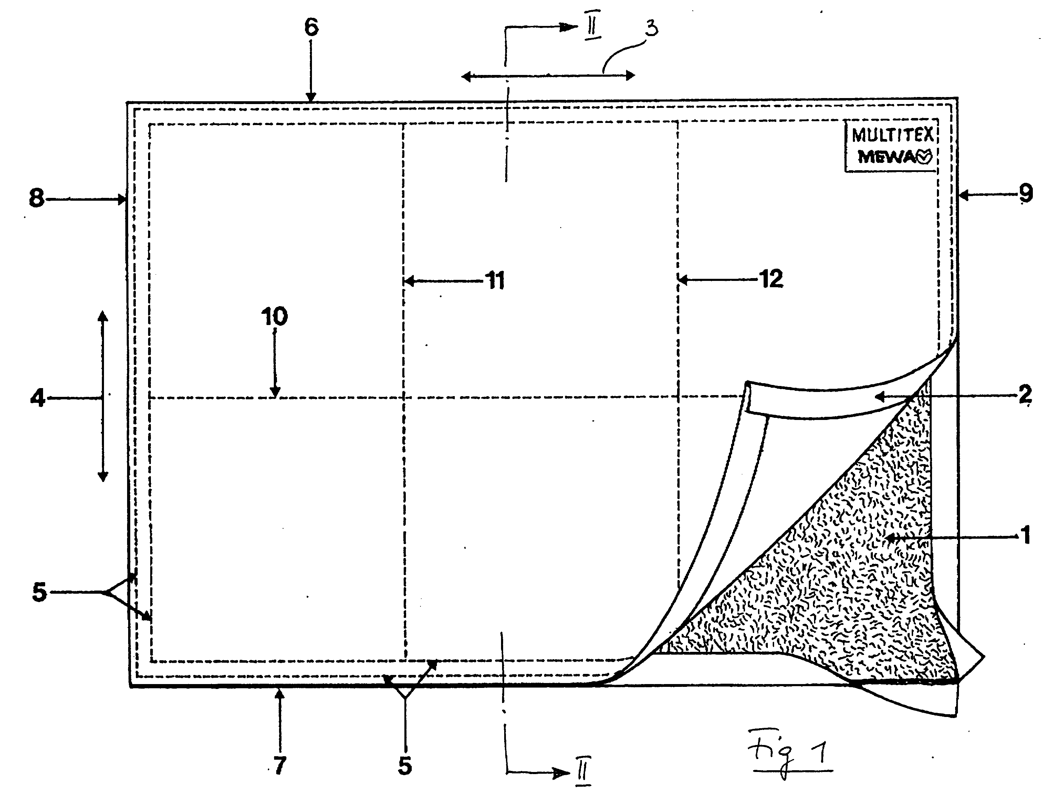

Fig. 1 eine Draufsicht auf die an einer Ecke aufgetrennte Saugmatte,

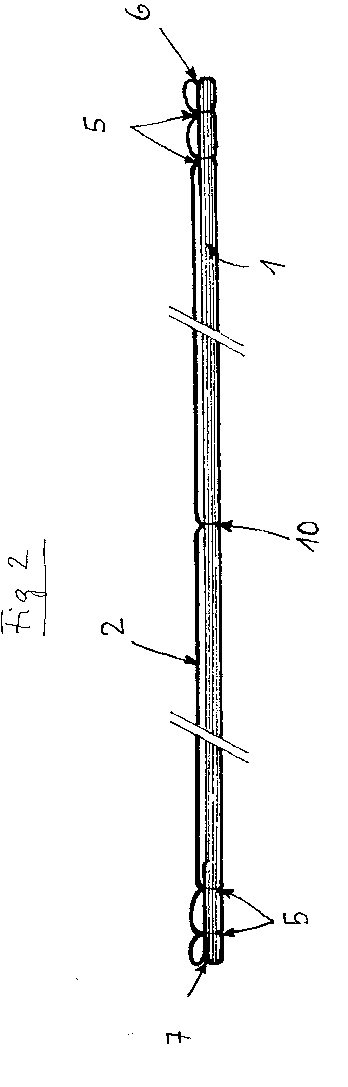

Fig. 2 einen Schnitt entsprechend der Linie II-II in Fig.1.

Die Saugmatte besteht im wesentlichen aus dem Kern 1 aus einem saug- und speicherfähigen Werkstoff sowie aus einer den Kern 1 umgebenden, flüssigkeitsdurchlässigen Umhüllung 2. Der Kern 1 besteht aus einem textilen Vliesstoff, welcher etwa 70-80° Polypropylen (= PP) und 30-20 % Viskose enthält. Die Gewebeumhüllung 2 enthält etwa 60-70% Polyester und 40-30 % Baumwolle. Dies ist etwa das Mischungsverhältnis des Gewebes für die Umhüllung. Als besonders zweckmäßig hat sich für die Herstellung des Kernes 1 ein Faser-Vliesstoff aus 75% PP und 25% Viskose erwiesen. Das Vliesgewicht beträgt etwa 450 g/m² bei einer Vliesdicke von 4-5 mm, insbesondere etwa 4,5 mm.

Als besonders zweckmäßig für die Umhüllung hat sich ein Gewebe im Mischungsverhältnis von 65% Polyester und 35 % Baumwolle (Intim-Mischung) bei den Gewebefäden erwiesen. Das Gewebegewicht des Hüllgewebes beträgt zwischen etwa 280-320 g/m². Es liegt insbesondere bei 300 g/m². Das Gewebe selbst zeichnet sich durch eine Köperbindung aus, die insbesondere 3-bindig ist (Köper 3/1).

Zur Herstellung der Umhüllung 2 wird die Längsseite 3 einer Hüllgewebebahn in einen Bruch gelegt. Die übrigen Seiten werden um einen Nahteinschlag von etwa 2-3 cm nach innen eingeschlagen und mit mindestens einer Naht 5 fixiert. Zweckmäßig sind es zwei in einem Abstand voneinander parallele Nähte bei einem Nahtabstand von etwa 10 mm.

Die äußere Naht hat von der Gewebeaußenkante einen Abstand von maximal 6 mm. Die Saumnähte sind in einem Zweinadel-Doppelsteppstich hergestellt.

Die Matte weist eine Rechteckform auf mit einer Abmessungsgröße von etwa 90 cm Länge in Längsrichtung 3 und von etwa 60 cm in Querrichtung 4.

Zwischen den Kanten 6-9 und parallel zu diesen sind Steppnähte 10-12 vorgesehen. Mit diesen Steppnähten 10-12 wird das Kernvlies 1 in der Umhüllung 2 fixiert. Die Steppnähte 10-12 sind in einem Einnadel-Doppelsteppstich hergestellt. Die mittlere Längs-Steppnaht 10 hält etwa einen gleichen Abstand von den parallelen Kanten 6,7 ein, während die beiden in Querrichtung verlaufenden Steppnähte 11,12 einen etwa gleichen Abstand sowohl voneinander als zu den Querkanten 8,9 der Saugmatte aufweisen. Das Nahtmaterial auch für die Steppnähte 10-12 ist Zwirn.

### Bezugszeichenliste

- 1: Kern
- 2: Umhüllung
- 3: Längsrichtung/Längsseite
- 4: Querrichtung/Ouerseite
- 5: Randnähte
- 6/7: Längskante
- 8/9: Querkante
- 10: Steppnaht Längsrichtung
- 11: Steppnaht Querrichtung
- 12: Steppnaht Querrichtung

## Patentansprüche

1. Saugmatte zur Aufnahme öliger und wässriger Flüssigkeiten mit einem von einer flüssigkeitsdurchlässigen Umhüllung (2) umgebenen Kern (1) aus einem saug- und speicherfähigen Werkstoff,
dadurch gekennzeichnet,
- daß der Kern (1) aus einem textilen Faser-Vliesstoff enthaltend etwa 70-80% Polypropylen (= PP) und 30-20% Viskose besteht und
- daß der Vliesstoff von einer Gewebeumhüllung aus in einer Größenordnung von 60-70% Polyester und 40-30% Baumwolle umgeben ist.

2. Saugmatte nach Anspruch 1,
gekennzeichnet durch
einen Faser-Vliesstoff aus 75% PP und 25% Viskose.

3. Saugmatte nach Anspruch 1 oder 2,
gekennzeichnet durch
ein Vliesgewicht von etwa 450 g/m².

4. Saugmatte nach einem oder mehreren der vorhergehenden Ansprüche,
gekennzeichnet durch
eine Vliesdicke von 4-5 mm.

5. Saugmatte nach Anspruch 1,
gekennzeichnet durch
eine Gewebeumhüllung aus 65% Polyester und 35% Baumwolle.

6. Saugmatte nach einem oder mehreren der Ansprüche 1 bis 5,
gekennzeichnet durch
ein Gewebegewicht des Hüllgewebes von 280-320 g/m².

7. Saugmatte nach Anspruch 6,
gekennzeichnet durch
ein Gewebegewicht des Hüllgewebes von 300 g/m².

8. Saugmatte nach einem der Ansprüche 6 oder 7,
gekennzeichnet durch
eine Köperbindung des Gewebes.

9. Saugmatte nach Anspruch 8,
gekennzeichnet durch
eine dreibindige Köperbindung (Köper 3/1).

10. Saugmatte nach einem oder mehreren der vorhergehenden Ansprüche,
dadurch gekennzeichnet,
- daß eine Längsseite (3) des Hüllgewebes in einen Bruch gelegt,
- daß die übrigen Seiten um einen Nahteinschlag von 2-3 cm nach innen eingeschlagen und mit mindestens einer Naht fixiert sind.

11. Saugmatte nach Anspruch 10,
dadurch gekennzeichnet,
daß zwei in einem Abstand voneinander parallel laufende Randnähte vorhanden sind.

12. Saugmatte nach Anspruch 10 oder 11,
gekennzeichnet durch
einen Nahtabstand von etwa 10 mm.

13. Saugmatte nach einem der Ansprüche 10 bis 12,
gekennzeichnet durch
einen Abstand der äußeren Naht von der Gewebeaußenkante von maximal 6 mm.

14. Saugmatte nach einem oder mehreren der vorhergehenden Ansprüche,
gekennzeichnet durch
einen Zweinadel-Doppelsteppstich der Saumnähte.

15. Saugmatte nach einem oder mehreren der vorhergehenden Ansprüche,
gekennzeichnet durch
eine Rechteckform mit einer Abmessungsgröße der Matte von mindestens 60 x 90 cm.

16. Saugmatte nach einem oder mehreren der vorhergehendne Ansprüche,
dadurch gekennzeichnet,
daß zwischen den Mattenkanten parallel zu diesen Steppnähte (10-12) vorgesehen sind.

17. Saugmatte nach Anspruch 16,
gekennzeichnet durch
einen Einnadel-Doppelsteppstich für die Steppnähte (10-12).

18. Saugmatte nach einem der Ansprüche 15 bis 17,
gekennzeichnet durch
eine mittlere Steppnaht (10) in Längsrichtung (5) und zwei Steppnähte (11,12) in Querrichtung (6) mit etwa gleichem Abstand im 1/3 Verhältnis voneinander und zu den Querkanten (8,9).

19. Saugmatte nach einem oder mehreren der vorhergehenden Ansprüche,
gekennzeichnet durch
Zwirn als Nahtmaterial.

## Claims

1. Absorbent mat for absorbing oily and watery liquids, comprising a core (1) of an absorption- and storage-capable material surrounded by a liquid-permeable sheath (2),
characterized in that
- the core (1) consists of a textile fibre web nonwoven comprising about 70-80% of polypropylene (= PP) and 30-20% of viscose and
- the nonwoven is surrounded by a woven fabric sheath comprising in the order of 60-70% of polyester and 40-30% of cotton.

2. Absorbent mat according to Claim 1,
characterized by
a fibre web nonwoven comprising 75% of PP and 25% of viscose.

3. Absorbent mat according to Claim 1 or 2,
characterized by
a web weight of about 450 g/m².

4. Absorbent mat according to one or more of the preceding claims,
characterized by
a web thickness of 4-5 mm.

5. Absorbent mat according to Claim 1,
characterized by
a woven fabric sheath comprising 65% of polyester and 35% of cotton.

6. Absorbent mat according to one or more of Claims 1 to 5,
characterized by
a fabric weight of 280-320 g/m² for the sheath fabric.

7. Absorbent mat according to Claim 6,
characterized by
a fabric weight of 300 g/m² for the sheath fabric.

8. Absorbent mat according to either of Claims 6 and 7,
characterized by
a twill construction for the woven fabric.

9. Absorbent mat according to Claim 8,
characterized by
a three-end twill construction (3/1 twill).

10. Absorbent mat according to one or more of the preceding claims,
characterized in that
- one longitudinal side (3) of the sheath fabric has been folded,
- the other sides have been tucked in by 2-3 cm and fixed with at least one seam.

11. Absorbent mat according to Claim 10,
characterized in that
two spaced apart parallel peripheral seams are present.

12. Absorbent mat according to Claim 10 or 11,
characterized by
a seam spacing of about 10 mm.

13. Absorbent mat according to any of Claims 10 to 12,
characterized by
a distance of not more than 6 mm for the outer seam from the outer edge of the fabric.

14. Absorbent mat according to one or more of the preceding claims,
characterized by
a two needle lockstitch for the hem seams.

15. Absorbent mat according to one or more of the preceding claims,
characterized by
a rectangular shape with dimensions of at least 60 × 90 cm for the mat.

16. Absorbent mat according to one or more of the preceding claims,
characterized in that
quilting seams (10-12) are provided between the mat's edges in a parallel arrangement therewith.

17. Absorbent mat according to Claim 16,
characterized by
a single needle lockstitch for the quilting seams (10-12).

18. Absorbent mat according to any of Claims 15 to 17,
characterized by
a central quilting seam (10) in the longitudinal direction (5) and two quilting seams (11,12) in the transverse direction (6) having approximately the same spacing in a 1/3 ratio to one another and to the transverse edges (8,9).

19. Absorbent mat according to one or more of the preceding claims,
characterized by
thread as stitching material.

## Revendications

1. Natte absorbante pour absorber des liquides huileux et aqueux présentant un noyau (1) constitué d'un matériau absorbant et capable de stocker un liquide, entouré d'une enveloppe perméable au liquide (2)
caractérisée en ce que
- le noyau (1) est constitué d'un non-tissé textile contenant environ 70-80% de polypropylène (= PP) et 30-20% de viscose et
- le non-tissé est entouré d'une enveloppe en tissu d'une constitution de l'ordre de grandeur de 60-70% de polyester et de 40-30% de coton.

2. Natte absorbante selon la revendication 1, caractérisée par un non-tissé constitué de 75% de PP et de 25% de viscose.

3. Natte absorbante selon la revendication 1 ou 2, caractérisée par un poids de non-tissé d'environ 450 g/m².

4. Natte absorbante selon l'une ou plusieurs quelconques des revendications précédentes, caractérisée par une épaisseur de non-tissé de 4-5 mm.

5. Natte absorbante selon la revendication 1, caractérisée par une enveloppe en tissu constituée de 65% de polyester et de 35% de coton.

6. Natte absorbante selon l'une ou plusieurs quelconques des revendications 1 à 5, caractérisée par un poids de tissu du tissu de l'enveloppe de 280-320 g/m².

7. Natte absorbante selon la revendication 6, caractérisée par un poids de tissu du tissu de l'enveloppe de 300 g/m².

8. Natte absorbante selon l'une quelconque des revendications 6 ou 7, caractérisée par une armure croisée du tissu.

9. Natte absorbante selon la revendication 8, caractérisée par une armure croisée à trois liaisons (armure croisée 3/1).

10. Natte absorbante selon l'une ou plusieurs quelconques des revendications précédentes, caractérisée
- en ce que le côté longitudinal (3) du tissu de l'enveloppe est posé dans un pli,
- en ce que les autres côtés sont repliés vers l'intérieur sur un pli de couture de 2-3 cm et sont fixés avec au moins une couture.

11. Natte absorbante selon la revendication 10, caractérisée en ce que deux coutures de bordure espacées parallèlement l'une de l'autre sont présentes.

12. Natte absorbante selon la revendication 10 ou 11, caractérisée par une distance entre les coutures d'environ 10 mm.

13. Natte absorbante selon l'une quelconque des revendications 10 à 12, caractérisée par une distance de la couture extérieure à partir de l'arête externe du tissu de 6 mm au maximum.

14. Natte absorbante selon l'une ou plusieurs quelconques des revendications précédentes, caractérisée par un point noué à deux fils-deux aiguilles des coutures de l'ourlet.

15. Natte absorbante selon l'une ou plusieurs quelconques des revendications précédentes, caractérisée par une forme rectangulaire avec des dimensions de la natte d'au moins 60 x 90 cm.

16. Natte absorbante selon l'une ou plusieurs quelconques des revendications précédentes, caractérisée en ce que sont prévues des coutures piquées (10-12) entre les arêtes de la natte parallèlement à celles-ci.

17. Natte absorbante selon la revendication 16, caractérisée par un point noué à deux fils-une aiguille pour les coutures piquées (10-12).

18. Natte absorbante selon l'une quelconque des revendications 15 à 17, caractérisée par une couture piquée médiane (10) dans la direction longitudinale (5) et deux coutures piquées (11, 12) dans la direction perpendiculaire (6) à peu près à la même distance dans un rapport 1/3 l'une de l'autre et par rapport aux arêtes perpendiculaires (8, 9).

19. Natte absorbante selon l'une ou plusieurs quelconques des revendications précédentes, caractérisée par du fil retors comme matériau de couture.
